# EUROPEAN PATENT SPECIFICATION

(11) **EP 1 415 752 B1**
(45) Date of publication and mention of the grant of the patent: **28.03.2007**
(21) Application number: 03024538.5
(22) Date of filing: 27.10.2003
(51) Int. Cl.: B23K 20/12, B21J 15/12

(54) **Method and use of a device for friction agitation welding**
Verfahren und Verwendung einer Vorrichtung zum Reibrührschweissen
Procédé et utilisation d'un dispositif de soudage par friction à mouvement cyclique

(30) Priority: 28.10.2002 JP 2002313019
(43) Date of publication of application: 06.05.2004
(73) Proprietor: Mazda Motor Corporation, Aki-gun, Hiroshima-ken (JP)
(72) Inventor: Murakami, Kotoyoshi, Aki-gun Hiroshima (JP)
(74) Representative: Laufhütte, Dieter

(56) References cited:
- EP-A- 1 153 694
- EP-A- 1 206 995
- EP-A- 1 386 688
- WO-A-00/18528
- WO-A-01/83153
- US-B1- 6 290 117

## Description

### BACKGROUND OF THE INVENTION

### 1. Field of the invention

The present invention relates to a method and a use of a device for friction agitation welding.

### 2. Description of Related Art

There have been widely known welding methods using friction agitation. One of such the welding methods is known as a spot welding method, disclosed in U.S. Patent Application Publication 2001/0045447, that includes the step of moving a rotating welding tool downward so as to apply pressure against plate workpieces superposed on each other in an axial direction of a joint and to generate heat between the rotating welding tool and the superposed plate workpieces as the rotating welding tool so as to plasticize a workpiece material around the rotating welding tool, thereby allowing the rotating welding tool to penetrate into one plate workpiece. The penetration of the rotating welding tool results in a plastic flow of a material of the one plate workpieces adjacent an interface of the superposed plate workpieces, thereby forming a spot weld across the joint between the superposed plate workpieces.

In the prior art welding method, the rotating welding tool is hard to force a plasticized workpiece material to be crammed down deeply into another plate workpiece. The spot weld is limited to a shallow region where the plastic flow of workpiece material is created near the interface between the superposed plate workpieces and a little weak in the joint consequently. In light of the weak joint strength of the prior art welding method, it has been required to increase joint strength.

### SUMMARY OF THE INVENTION

It is therefore an object of the present invention to provide a friction agitation welding method and the use of a device that provide enhanced joint strength of a weld across a joint between superposed plate workpieces.

The foregoing object of the present invention is accomplished by a friction agitation welding method comprising the steps of disposing and grasping superposed plate workpieces comprising a first or upper plate workpiece made up of one or more plates and a second or lower plate workpiece made up of a single plate having a through hole or bore as a joint bore formed therein between a rotatably driven friction agitation welding tool and a back-up tool which are opposed to and spaced apart from each other in a predetermined welding path, the second plate workpiece being placed with the joint bore faced to the back-up tool, and rotating and advancing the friction agitation welding tool toward the back-up tool in the predetermined welding path to cause the friction agitation welding tool to penetrate into the second plate wirkpiece while urging the friction agitation welding tool and the first plate workpiece together whereby generating frictional heat to create a plasticized region in a workpiece material around said friction agitation welding tool and cramming a plasticized workpiece material into the joint bore of the second plate workpiece.

Rotation and penetration of the friction agitation welding tool crams a plasticized workpiece material into the joint bore of the second plate workpiece and causes a plastic flow of the plasticized workpiece material as the friction agitation welding tool is further advanced. As a result, large force for pressure welding is exerted on an inner wall of the joint bore as a surface region of the first plate workpiece is plasticized, so as to provide a strong weld over a wide area of a joint including the inner surface of the joint bore, thereby improving joint strength between the superposed plate workpieces.

The plasticized material crammed into the joint bore is partly allowed to run off out of the joint bore and to spread outward in radial directions around the joint bore. When the plasticized workpiece material is solidified, the second plate workpiece is firmly held between the solidified workpiece material crammed in the joint bore and the first plate workpiece. Therefore, the superposed plate workpieces are mechanically firmly joined together with an increased joint strength in the direction of superposition.

While the friction agitation welding tool and the first plate workpiece are urged together, pressure is applied to the second plate workpiece in a region around the joint bore from the outside by the back-up tool and is relieved from the first plate workpiece in a corresponding region. Accordingly, as the workpiece material is plasticized with frictional heat generated resulting from rotation of the friction agitation welding tool, the plasticized workpiece material flees in the corresponding region, so that the second plate workpiece is allowed to heave up at an edge of the joint bore to penetrate into the first plate workpice. In consequence, there is formed a firm weld between the superposed plate workpieces in the direction of shear deformation and hence an improved weld across a joint between the superposed plate workpieces.

It is preferred that the superposed plate workpieces are different in material from each other and the first plate workpiece is lower in softness than the second plate workpiece. For example, the second plate workpiece is made up of a steel plate and the first plate workpiece is made up of an aluminum plate.

The foregoing object of the present invention is also accomplished by the use of a friction agitation welding device for forming a weld across a joint between superposed plate workpieces comprising a first or upper plate workpiece made up of one or more plates and a second or lower plate workpiece made up of a single plate having a through hole or bore as a joint bore formed therein. The friction agitation welding device comprises a rotatably driven friction agitation welding tool adapted to penetrate a joint between the superposed plate workpieces from a first or upper plate workpiece so as thereby to plasticize a material of the plate workpieces with frictional heat generated resulting from rotation of the friction agitation welding tool and a back-up tool aligned with the friction welding tool in an axial direction of the joint and supporting the superposed plate workpieces from a side of the second plate workpiece and having a circular cavity whose opening diameter is greater than a diameter of the joint bore of the second plate workpiece.

According to the friction agitation welding device, the cavity of the back-up tool that is greater in diameter than the joint bore allows the plasticized workpiece material partly to run off out of the joint bore and spread outward in radial directions around the joint bore. When the plasticized workpiece material is solidified, the second plate workpiece is firmly held between the solidified workpiece material out of the joint bore and the first plate workpiece. Further, the plasticized workpiece material run off out of the joint bore exerts pressure on an edge of the joint bore against the friction agitation welding tool. Accordingly, as plasticization of the material of the second plate workpiece (at the inner wall and the edge of the joint bore) develops, the plasticized workpiece material is allowed to heave up at the top edge of the joint bore to penetrate into the first plate workpice. In consequence, there is formed a firm weld across a joint between the superposed plate workpieces.

It is preferred for the friction agitation welding tool to have a cylindrical friction agitation spindle that penetrates into the first plate wirkpiece while urging the friction agitation welding tool and the first plate workpiece together whereby generating frictional heat to create a plasticized region in a workpiece material around the friction agitation spindle and an annular groove formed coaxially with and around the friction agitation spindle. Accordingly, as the workpiece material is plasticized with frictional heat generated resulting from rotation of the friction agitation welding tool, the plasticized workpiece material flees into the annular groove, so that the second plate workpiece is allowed to heave up at the top edge of the joint bore to penetrate into the first plate workpiece. In consequence, there is formed a firm weld between the superposed plate workpieces in the direction of shear deformation and hence an improved weld across a joint between the superposed plate workpieces.

### BRIEF DESCRIPTION OF THE DRAWINGS

The above and other objects and features of the present invention will be understood from the following description of a specific embodiment thereof when considering in conjunction with the accompanying drawings, wherein the same reference numerals denote same or similar parts throughout the drawings, and in which:
Figures 1 is a schematic view of a robotic welding machine equipped with a friction agitation welding device;
Figures 2 is a schematic view of a welding head including the friction agitation welding device;
Figures 3 is a side view showing details of the friction agitation welding device which is used to form a weld across a joint between two superposed plate workpieces;
Figures 4 is a side view of the friction agitation welding device in an initial step of a welding process;
Figures 5 is a side view of the friction agitation welding device in a subsequent step of the welding process;
Figures 6 is a side view of the friction agitation welding device in a terminative step of the welding process;
Figures 7 is a side view showing details of a friction agitation welding device;
Figures 8 is a side view of the friction agitation welding device in an intermediate step of a welding process;
Figures 9 is a side view of the friction agitation welding device in a terminative step of the welding process;
Figures 10 is a side view showing details of a friction agitation welding device which is used to form a weld across a joint between three superposed plate workpieces;
Figures 11 is a side view showing details of a friction agitation welding device;
Figures 12 is a side view showing details of a friction agitation welding device ; and
Figures 13 is a side view showing details of a friction agitation welding device.

### DETAILED DESCRIPTION OF THE SPECIFIC EMBODIMENT

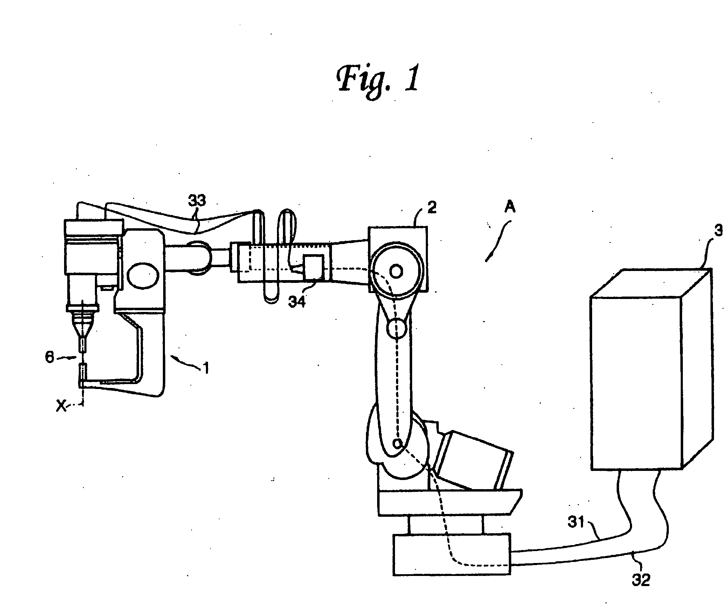

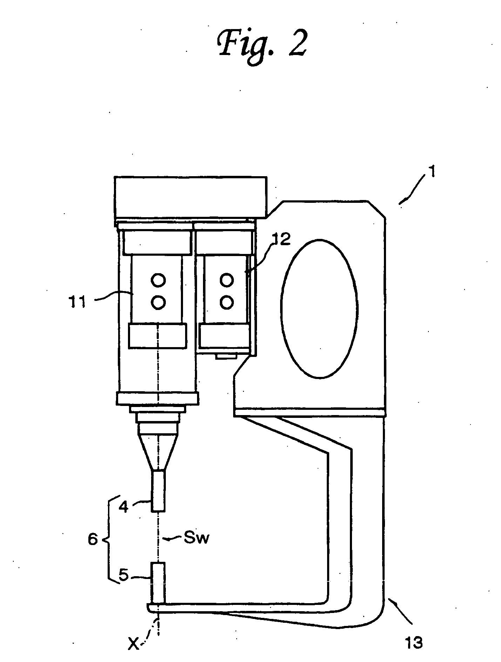

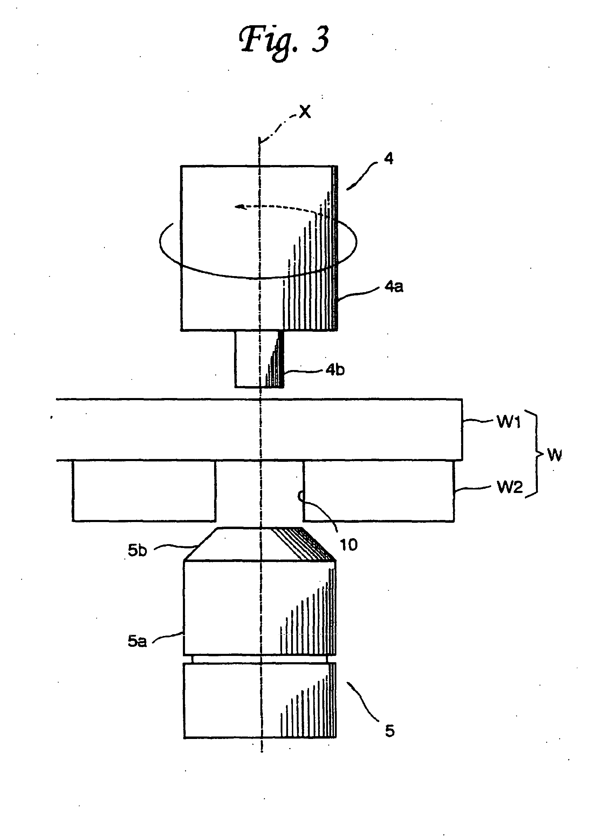

Referring to the drawings in detail, and, in particular, to Figures 1 and 2 showing a robotic welding machine A for implementing a friction agitation welding method according to a preferred embodiment of the present invention, the robotic welding machine A is used, for example, to form a weld across a joint between two superposed plate workpieces, such as an aluminum alloy plate as a first plate workpiece and a steel plate as a second plate workpiece, of, for example, vehicle bodies, which are positioned in superposed relation. The robotic welding machine A basically comprises a welding head positioning robot 2 having a robot arm with a welding head 1 and a control unit 3 for controlling operation of the welding head positioning robot 2 and the welding head 1. The welding head positioning robot 2 operates to position the welding head 1 in a welding spot with respect to superposed plate workpieces W (see Figure 3). A general purpose six-shafts vertical articulated manipulator may be employed for the welding head positioning robot 2.

As shown in Figure 2 in detail, the welding head 1 includes two motors 11 and 12 fixedly mounted thereto and a generally L-shaped frame 13 and a friction agitation welding device 6 which comprises a rotatably driven friction agitation welding tool (which is referred to as a friction agitation welding tool for simplicity) 4 detachably mounted to the motor 11 and a back-up tool 5 detachably mounted to the L-shaped frame 13. These friction agitation welding tool 4 and back-up tool 5 are aligned with an axis of welding X and spaced apart to define a work-receiving space Sw for receiving the superposed plate workpieces W therein. The motor 12, that is desirably a servo motor, rotates the friction agitation welding tool 4 about the axis of welding X. The motor 11, that is desirably an induction motor or a servo motor, moves the friction agitation welding tool 4 downwardly along the axis of welding X to apply pressure to the superposed plate workpieces W.

The control unit 3 is electrically connected to the welding head positioning robot 2 through a harness 31, to a relay box 34 through a harness 32, and to the welding head 1 through harnesses 33. The control unit 3 controls eight shafts, namely two rotary shafts of the motors 11 and 12 and six articulation shafts of the welding head positioning robot 2.

Referring to Figure 3 showing the friction agitation welding device 6 in detail, the friction agitation welding tool 4, that is an integral piece, comprises a cylindrical shank 4a and a cylindrical friction agitation spindle 4b having a diameter smaller than the cylindrical shank 4a. The back-up tool 5, that is an integral piece, comprises a cylindrical shank 5a having the substantially same diameter as the cylindrical shank 4a of the friction agitation welding tool 4 and a frust-conical jaw 5b. All of these shanks 4a and 5a, friction agitation spindle 4b and jaw 5b are aligned with the axis of welding X. The friction agitation spindle 4b is flat at the tip. Otherwise, in light of smooth and steady penetration of the friction agitation spindle 4b into the plate workpiece, the friction agitation spindle 4b at the tip is desirably rounded with a curvature radius of, for example, 40 mm. When the friction agitation spindle 4b at the tip is rounded, the friction agitation spindle 4b produces a centripetal action and, in consequence, smoothly and steadily penetrates into the superposed plate workpieces W.

The jaw 5b is flat at the tip. The friction agitation spindle 4b of the friction agitation welding tool 4 extends into the work-receiving space Sw generally normally toward the opposite surface of the jaw 5b of the back-up tool 5 along the axis of welding X.

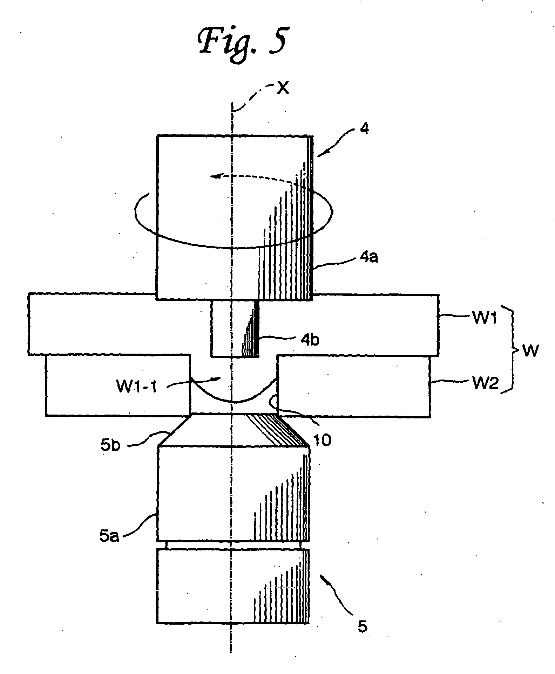

Friction agitation welding using the robotic welding machine A will be described with reference to Figures 3 to 6 below.

The friction agitation welding method of the present invention is suitably applied to formation of a weld across a joint between a plurality, for example two in this embodiment, superposed plate workpieces W which are different in material and especially in relative softness. The superposed plate workpieces W comprise a first or upper plate workpiece W1 on the side of the friction agitation welding tool 4 and a second or lower plate workpiece W2 on the side of the back-up tool 5. The upper plate workpiece W1 is higher in relative softness (i.e. lower in relative hardness) than the second plate workpiece W2. In this instance, the first plate workpiece W1 is made up of an aluminum plate and the second plate workpiece W2 is made up of a steel palate. The second plate workpiece W2 is previously provided with a through hole or bore as a joint bore 10 that is slightly smaller in diameter than the tip of the frust-conical jaw 5b of the back-up tool 5.

The first plate workpiece W1 and the second plate workpiece W2 are fixedly set in superposed relation and put in the work-receiving space Sw between the friction agitation welding tool 4 and the back-up tool 5. In the set position, the second plate workpiece W2 is positioned with the center of the joint bore 10 aligned with the axis of welding X as shown in Figure 3.

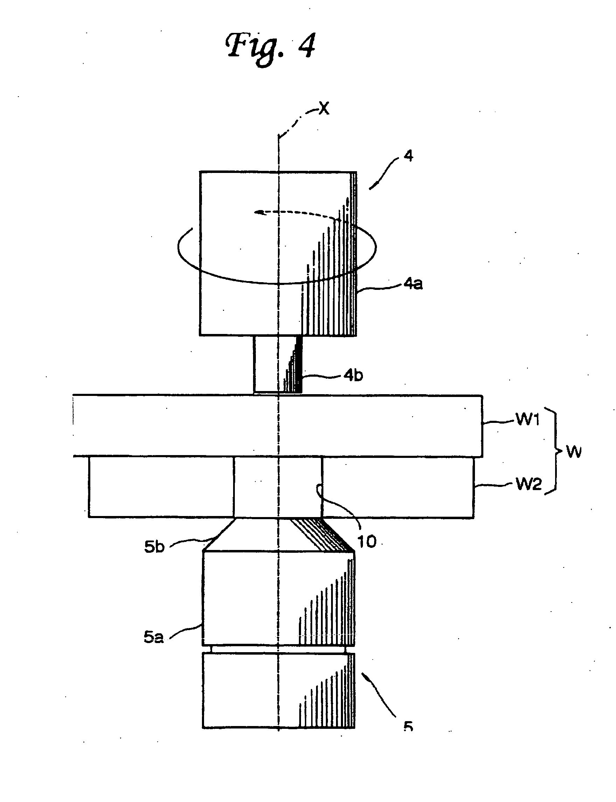

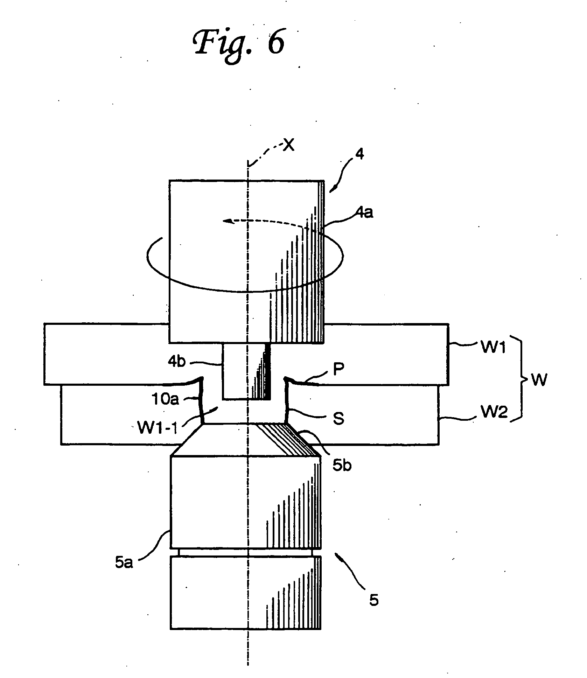

When friction agitation welding starts, the welding head positioning robot 2 manipulates and puts the welding head 1 in a specified welding position along the axis of welding X. In the welding position, the back-up tool 5 is put right below the joint bore 10 of the second plate workpiece W2 and then is brought into contact with the second plate workpiece W2. Subsequently, the motors 11 and 12 are actuated to rotate the friction agitation welding tool 4 and to move the rotating friction agitation welding tool 4 downwardly normally toward the jaw 5b of the back-up tool 5 along the axis of welding X until the friction agitation spindle 4b of the rotating friction agitation welding tool 4 abuts the first plate workpiece W 1 so as thereby to grasp the superposed plate workpieces W (W 1 and W2) between the friction agitation spindle 4b of the rotating friction agitation welding tool 4 and the jaw 5b of the back-up tool 5 as shown in Figure 4. While the rotating friction agitation welding tool 4 is kept in abutment against the first plate workpiece W1, it frictionally heats the workpiece material of the first plate workpiece W1 adjacent the friction agitation spindle 4b thereof and causes the workpiece material to plasticize, enabling the friction agitation spindle 4b to penetrate into the first plate workpiece W1. In the case where the friction agitation spindle 4b at the tip is rounded, penetration of the friction agitation spindle 4b into the superposed plate workpieces W is smooth and steady due to a centripetal action of the friction agitation spindle 4b. As the rotating friction agitation tool 4 is continuously moved downwardly normally toward the jaw 5b of the back-up tool 5 to apply pressure between the friction agitation spindle 4b and the first plate workpiece W1, the rotating friction agitation tool 4 forces the friction agitation spindle 4b to penetrate into the first plate workpiece W1, plasticizing the workpiece material of the first plate workpiece W1 and forces the plasticized workpiece material W1-1 into the joint bore 10 of the second plate workpiece W2 to cram and fill it with the plasticized workpiece material W1-1. As the rotating friction agitation tool 4 is further advanced, the friction agitation spindle 4b of the rotating friction agitation tool 4 comes into the joint bore 10 as shown in Figure 6, causing a plastic flow of the workpiece material around the friction agitation spindle 4b within the joint bore 10. With plasticization of a surface region of the second plate workpiece W2 caused by friction heat due to rotation of the friction agitation welding tool 4, radial pressure is produced against the entire wall of the joint bore 10, providing formation of a strong solid phase weld (indicated by a reference symbol "S" in Figure 6) between the first plate workpiece W1 and the second plate workpiece W2 across a joint (the joint bore 10). At this time, rotation of the friction agitation welding tool 4 also causes plasticization of workpiece material then a plastic flow of workpiece material, between the second plate workpiece W2 and a shoulder portion of the rotating friction agitation welding tool 4 defined between the under side of the cylindrical shank 4a and the friction agitation spindle 4b, resulting in formation of a strong solid phase weld (indicated by a reference symbol "P" in Figure 6) at an interface between the first plate workpiece W1 and the second plate workpiece W2 around the top edge of the joint.

The jaw 5b of the back-up tool 5 abuts against the bottom edge of the joint bore 10 and the conical surface of the jaw 5b penetrates into the joint bore 10, causing deformation of the second plate workpiece W2 around the jaw 5b. In this instance, the jaw 5b is configured so as to provide an area of the conical surface engaging with the second plate workpiece W2 made as small as possible for preventing frictional heat from escaping through the jaw 5b. Therefore, the jaw 5b penetrating into the joint bore 10 heaves up the second plate workpiece W2 partly plasticized around the joint bore 10 toward the first plate workpiece W1, resulting in forcing a circumferential plasticized workpiece material of the second plate workpiece W2 around the top edge 10a of the joint bore 10 to penetrate into the plasticized workpiece material of the first plate workpiece W1 as shown in Figure 6. This penetration improves joint strength between the first plate workpiece W1 and the second plate workpiece W2.

After a lapse of a certain time, the motor 12 is reversed to move the friction agitation welding tool 4 upward out of the specified welding position so as thereby to put it in a waiting position for another welding operation. The motor 11 is left actuated while the friction agitation welding tool 4 is in the waiting position for rapidly cooling down the plastic flow of workpiece material of the superposed plate workpieces W to solidify the weld across the joint, completing the lap-welding of the superposed plate workpieces W.

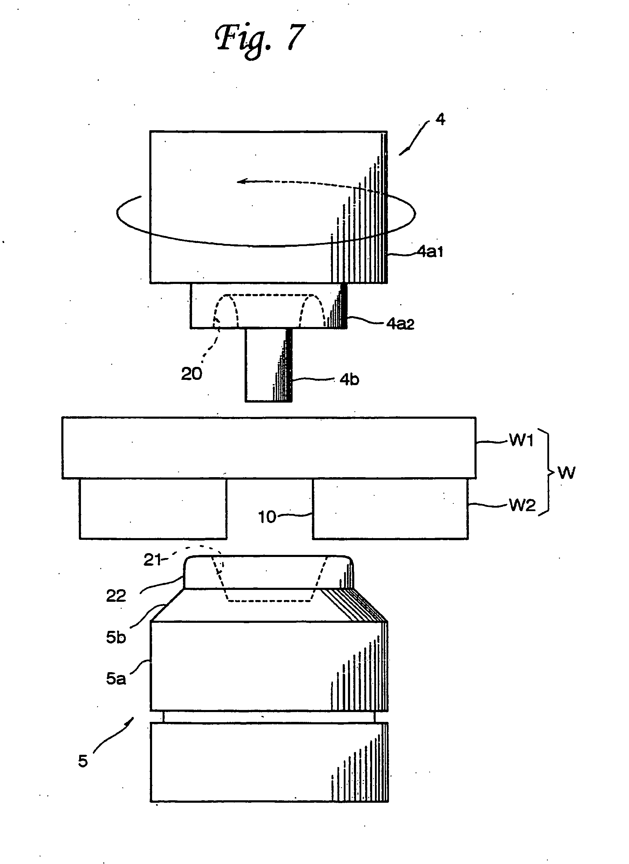

Figures 7 to 9 show an improved friction agitation welding device 6 for providing increased joint strength of the superposed plate workpieces W.

A friction agitation welding device 6 comprises a rotatably driven friction agitation welding tool 4 detachably mounted to the motor 11 and a back-up tool 5 detachably mounted to an generally L-shaped frame 13. These tools 4 and 6 are aligned with an axis of welding X and spaced apart from each other to define a work-receiving space Sw (see Figure 2) for receiving superposed plate workpieces W therein. The friction agitation welding tool 4, that is an integral piece, comprises a cylindrical shank 4a (a thick shank section 4a₁ and a thin shank section 4a₂) and a cylindrical friction agitation spindle 4b having a diameter smaller than the small shank section 4a₂. The friction agitation welding tool 4 is provided with a shoulder between the thick shank section 4a₁ and the thin shank section 4a₂ and an annular groove 20 formed in the small shank section 4a₂ coaxially with and around the friction agitation spindle 4b. The annular groove 20 serves as a buffer space for receiving a plasticized workpiece material when the shoulder of the friction agitation welding tool 4 is brought into contact with the workpieces. The back-up tool 5, that is an integral piece, comprises a cylindrical shank 5a having the substantially same diameter as the thick shank section 4a₁ of the friction agitation welding tool 4 and a trust-conical jaw 5b. The back-up tool 5 has an inverted frust-conical cavity 21 extending into the frust-conical jaw 5b and enclosed by an annular wall 22. The frust-conical cavity 21 of the back-up tool 5 serves as a space for receiving a plasticized workpiece material. The opening of the frust-conical cavity 21, i.e. the opening of the annular wall 22, is larger in diameter than a joint bore that is to be formed in the second plate workpiece W2. The annular wall 22 at its outer top is rounded or tapered so as to make a top wall end as thin as possible.

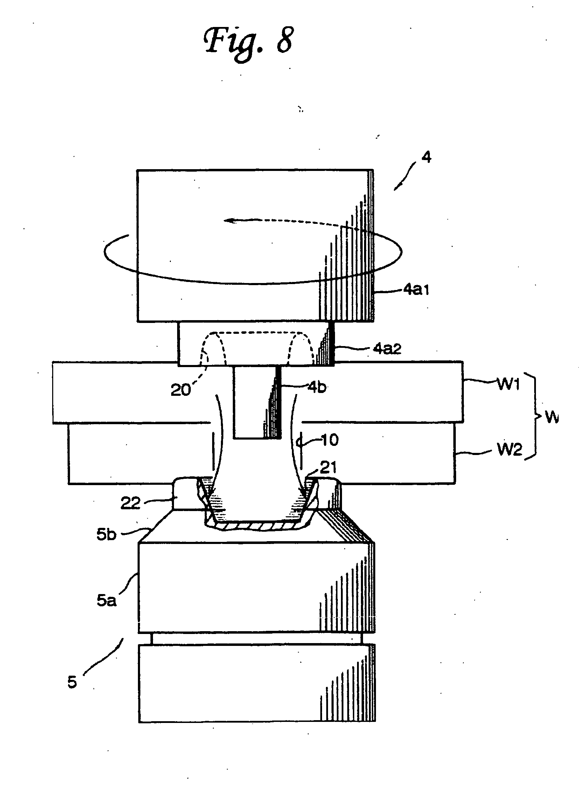

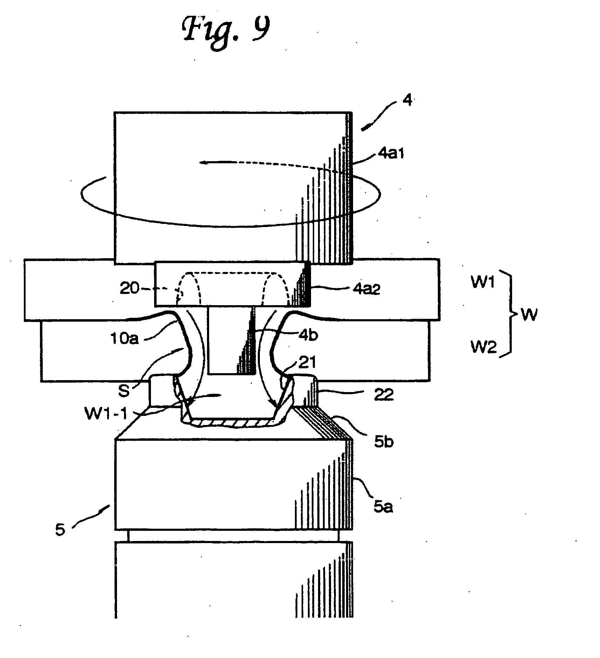

When performing friction agitation welding for superposed plate workpieces W, namely a first plate workpiece W1 made up of an aluminum plate and a second plate workpiece W2 made up of a steel plate having a joint bore 10, using the friction agitation welding tool 6, the back-up tool 5 is brought into abutment against the second plate workpiece W2 with the frust-conical cavity 21 facing the joint bore 10. Under this condition, while the rotating friction agitation welding tool 4 is kept in abutment against the superposed plate workpieces W, it frictionally heats the material of the superposed plate workpieces W and causes the material of the superposed plate workpieces W to be plasticized with frictional heat. While the friction agitation welding tool 4 continuously rotates and urges the superposed plate workpieces W, a plasticized workpiece material W1-1 of the first plate workpiece W1 is forced downward by the cylindrical friction agitation spindle 4b of the friction agitation welding tool 4 so as thereby to be plasticized due to friction heated and to be crammed into the joint bore 10 of the second plate workpiece W2 and then into the frust-conical cavity 21 of the back-up tool 5 as shown by arrows in Figure 8. The plastisized workpiece material W1-1 spreads outward in radial directions around the joint bore 10. As a result, the second plate workpiece W2 is firmly held between the solidified workpiece workpiece material W1-1 within and out of the joint bore 10. Therefore, the first plate workpiece W1 and the second plate workpiece W2 are mechanically firmly joined together with increased joint strength in a direction of joint. In addition, during advancement of the friction agitation welding tool 4, rotation of the friction agitation welding tool 4 results in a plastic flow of the plastisized workpiece material W1-1 around a vertical center axis of the cylindrical friction agitation spindle 4b in the joint bore 10. Pressure is produced at the interface between the plastisized workpiece material W1-1 and the inner wall of the joint bore 10 due to interaction between the plastization of workpiece material and the plastic flow of the workpiece material W1-1. As a result, the first plate workpiece W1 and the second plate workpiece W2 are mechanically firmly joined together at the interface therebetwen. At this time, rotation of the friction agitation welding tool 4 results in plasticization of workpiece material and plastic flow of the workpiece material W1-1 between the top surface of the second plate workpiece W2 and the under surface of the thin shank section 4a₂ of the cylindrical shank 4a and also between the under surface of the thick shank section 4a₁ of the cylindrical shank 4a and the top surface of the second plate workpiece W2. In consequence, the first plate workpiece W1 and the second plate workpiece W2 are mechanically firmly joined together at an interface between the plate workpieces W around the joint bore 10. The pressure-welded part of the plate workpieces W is thickenly lined out and marked S in Figure 9.

During downward movement of the friction agitation welding tool 4, the annular wall 22 of the back-up tool 5 compresses the second plate workpiece W2 against the first plate workpiece W1, thereby forcing the plasticized workpiece material W1-1 to enter the annular groove 20. Simultaneously, the annular wall 22 of the back-up tool 5 penetrates into the second plate workpiece W2, thereby bending circumferential part of the second plate workpiece W2 around the joint bore 10 against the first plate workpiece W1. As a result, as shown in Figure 9, a top edge portion 10a of the joint bore 10 is easily forced to penetrate into the first plate workpiece W1. This penetration of the top edge portion 10a of the joint bore 10 provides an increased joint strength of the superposed plate workpieces W in the direction of shear deformation.

The back-up tool 5 is configured so as to have a contact area as small as possible between the annular wall 22 and circumferential portion of the second plate workpiece W2 around the joint bore 10 for the purpose of preventing or significantly reducing an escape of frictional heat through the superposed plate workpieces W. On the other hand, while the friction agitation welding tool 4 is kept rotating in the welding process and the shoulder between the thick and thin shank sections 4a₁ and 4a₂ is kept in contact relation with the first plate workpiece W1, the friction agitation welding tool 4 produces an increased quantity of frictional heat that is supplied to the superposed plate workpieces W. The friction agitation welding toll 4 that remains in abutment against the superposed plate workpieces W at the shoulder of the cylindrical shank 4a decreases pressure applied to the superposed plate workpieces W per unit area, so as thereby to prevent the friction agitation spindle 4b from penetrating into the superposed plate workpieces W at an excessive speed.

After a lapse of a specified aging time, the friction agitation welding tool 4 and the back-up tool 5 are moved away from the superposed plate workpieces W in opposite directions and landed up in a specified waiting position in preparation for another welding operation. The friction agitation welding tool 4 is kept rotating during the movement, resulting in rapid cooling the superposed plate workpieces W.

Although the previous embodiments are directed to the lap-welding of two plate workpieces W made up of an aluminum plate for the first plate workpiece W1 and a steel plate for the second plate workpiece W2 which are approximately the same in thickness, the first plate workpiece W1 may be thicker than the second plate workpiece W2 with the intention of lowering a reduction in thickness due to penetration of the friction agitation spindle 4b into the second plate workpiece W2.

Although the previous embodiments are directed to the lap-welding of two superposed superposed plate workpieces W comprising two plate workpieces different in material, the friction agitation welding method of the present invention is applied to the lap-welding of three superposed plate workpieces W such as three aluminum plates W1 or two aluminum plates W1 and one steel plates W2.

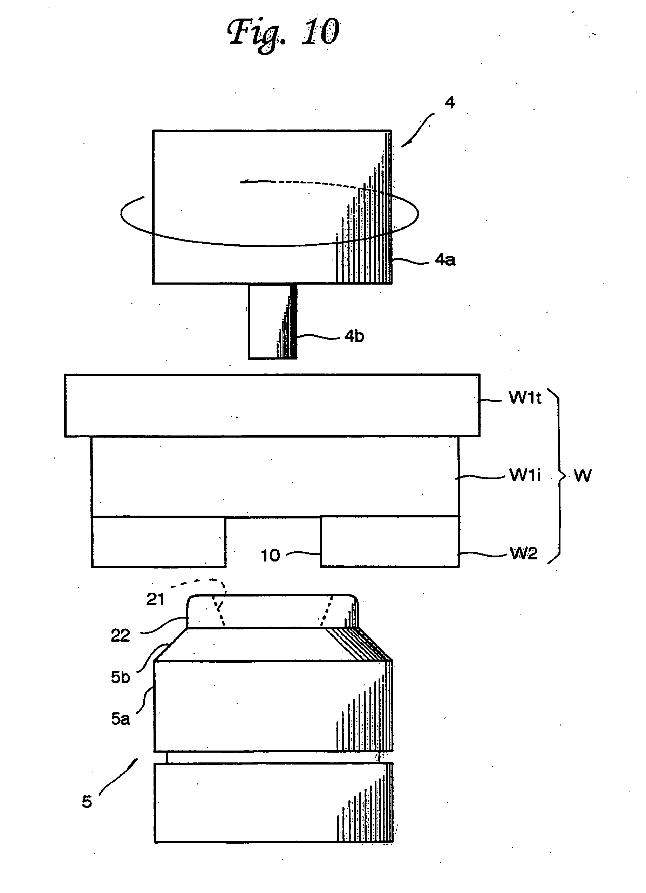

As shown in Figure 10 showing the case where the lap-welding of three superposed plates workpieces W comprising a first or upper plate workpiece W1 made up of top and intermediate aluminum plates W1t and W1i and a second or lower plate workpiece W2 made up of a single aluminum plate having a joint bore 10 formed therein. In this instance, it is preferred that a friction agitation welding device 6 comprises a friction agitation welding tool 4 having a cylindrical shank 4a and a cylindrical friction agitation spindle 4b and a back-up tool 5 having at least a frust-conical cavity 21 and an annular wall 22 surrounding the frust-conical cavity 21.

In the lap-welding process for the three superposed plate workpieces W, the back-up tool 5 is put right below the joint bore 10 of the second plate workpiece W2 and then brought into contact with it. Subsequently, the friction agitation welding tool 4 is actuated to rotate and move downwardly until the friction agitation spindle 4b abuts against the top plate workpiece W1t so as thereby to grasp together the three superposed plate workpieces W between the rotating friction agitation welding tool 4 and the back-up too 51. While the friction agitation welding tool 4 is kept rotating, the friction agitation spindle 4b is forced to penetrate into the first plate workpiece W1, namely the top and intermediate plate workpieces W1t and W1i, so as to plasticize the workpiece material with frictional heat, thereby causing a plastic flow of the workpiece material around the friction agitation spindle 4b. In consequence, the plasticized workpiece material is crammed into the joint bore 10 of the second plate workpiece W2 and then into the frust-conical cavity 21 of the backing tool 5. Similarly to solid-state welding of two superposed plate workpieces that are different in material, the three superposed plate workpieces are mechanically firmly joined together. In this instance, the superposed top and intermediate plate workpieces W1t and W1i are joined together resulting from a plastic flow of the workpiece material of portions of the top and intermediate plate workpieces W1t and W1i close to the interface between them.

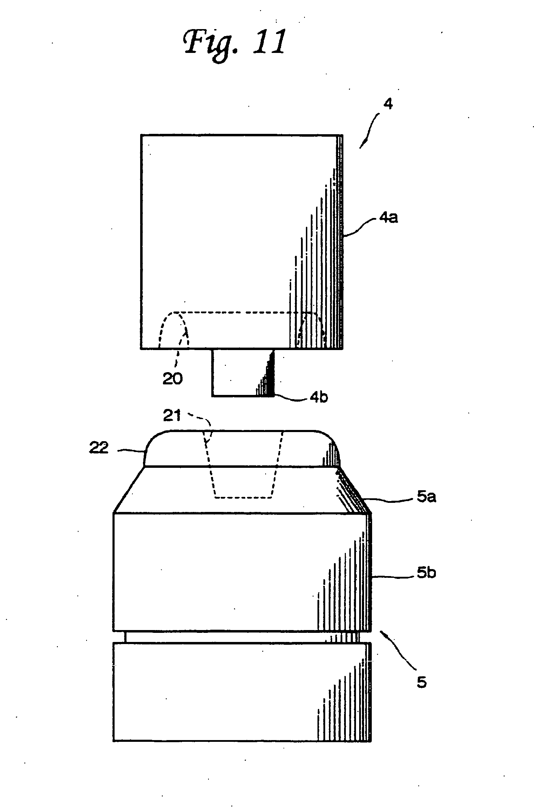

Figure 11 shows a simplified variation of the friction agitation welding device 6 shown in Figure 9. As shown in figure 11, the friction agitation welding device 6 may comprise a friction agitation welding tool 4 having a cylindrical shank 4a and a cylindrical friction agitation spindle 4b without forming a shoulder therebetween.

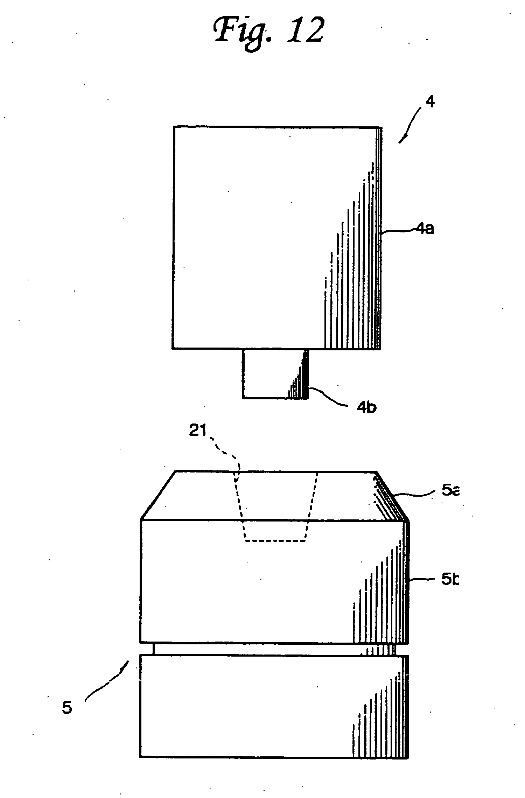

Figure 12 shows another simplified variation of the friction agitation welding device 6 shown in Figure 9. As shown in figure 12, the friction agitation welding device 6 may comprise a friction agitation welding tool 4 having a cylindrical shank 4a without an annular groove 20 around a cylindrical friction agitation spindle 4b and a back-up tool 5 having an inverted frust-conical cavity 21 but no annular wall 22.

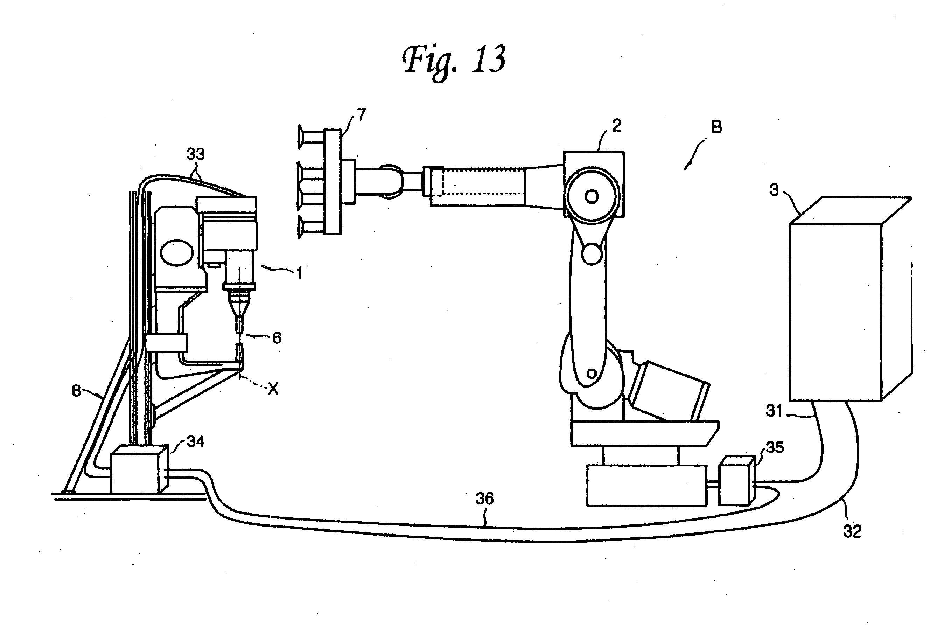

Figure 13 shows a robotic welding machine B according to another embodiment for implementing a friction agitation welding method of the present invention. The robotic welding machine B basically comprises a welding head 1 installed on a stand 8 that is provided separately from a workpiece positioning robot 2 for positioning superposed plate workpieces W in a specified welding spot. The welding head 1 itself is basically the same in structure and operation as that of the robotic welding machine A. The workpiece positioning robot 2 includes a manipulatory hand 7 that is known in various forms and may take any well known form. The workpiece positioning robot 2 is electrically connected to a control unit 3 through a distribution box 35 and a harness 31. The welding head 1 is electrically connected to a relay box 34 through harnesses 33. The relay box 34 is electrically connected to the control unit 3 through a harness 32 and to the distribution box 35 through a harness 36 as well. The workpiece positioning robot 2 clutches superposed plate workpieces W with the manipulator hand 7 and positions them in the specified welding spot between a friction agitation welding tool 4 and a buck-up tool 5.

In light of upgrading the strength of a solid-state weld across a joint of superposed plate workpieces W, it is desirable that the second plate workpiece W2 is free from formation of an oxidized film at the inner wall of the joint bore 10. Further, it is preferred to apply the friction agitation welding method of the present invention to superposed plate workpieces W comprising an aluminum plate for a first plate workpiece W1 and a galvanized steel plate for a second plate workpiece W2 because a chemical reaction between zinc and aluminum results in improving the strength of a weld across a joint between the superposed plate workpieces W.

Although, in the above embodiments, the back-up tool 5 is described as remaining stationary, it may rotate about the axis of welding X as well as the friction agitation welding tool 4 in order to provide frictional heat for plasticization of the superposed plate workpieces W. In addition, the cylindrical shank 4a of the friction agitation welding tool 4 of any embodiment may have two shank sections, a thick shank section and a thin shank section, so as to form a shoulder therebetween for the purpose of increasing a quantity of frictional heat in the superposed plate workpieces W and a contact area to the first plate workpiece.

It is to be understood that although the present invention has been described with regard to preferred embodiments thereof, various other embodiments and variants may occur to those skilled in the art, which are within the scope of the following claims.

## Claims

1. A friction agitation welding method of forming a weld across a joint between superposed plate workpieces (W1, W2) disposed and grasped between a rotatably driven friction agitation welding tool (4) and a back-up tool (5) which are opposed to each other in a predetermined axis of welding (X), said friction agitation welding method comprising the steps of:
preparing superposed plate workpieces (W1, W2) comprising a first plate workpiece (W1) made up of one or more plates and a second plate workpiece (W2) made up of a single plate having a joint bore (10) formed therein,
disposing and grasping said superposed plate workpieces (W1, W2) between said rotatably driven friction agitation welding tool (4) and said back-up tool (5) with said joint bore (10) being faced to said back-up tool (5);
rotating and advancing said friction agitation welding tool (4) toward said back-up tool (5) in said predetermined axis of welding (X) to cause said friction agitation welding tool (4) to penetrate into said first plate workpiece (W1) while urging said friction agitation welding tool (4) and said first plate workpiece (W1) together whereby generating frictional heat to create a plasticized region in a workpiece material around said friction agitation welding tool (4) and cramming a plasticized workpiece material into said joint bore (10) of said second plate workpiece (W2); and
allowing said plasticized workpiece material to solidify to complete a weld across said joint.

2. A friction agitation welding method as defined in claim 1, wherein said plasticized workpiece material is partly extruded out of said joint bore (10) so as to spread out of said joint bore (10).

3. A friction agitation welding method as defined in claim 1, wherein, while urging said friction agitation welding tool (4) and said first plate workpiece (W1) together, pressure is applied to said second plate workpiece (W2) in a region around said joint bore (10) from the outside and is relieved from said first plate workpiece (W1) in a corresponding region.

4. A friction agitation welding method as defined in claim 1, wherein said first plate workpiece (W1) is different in material from and lower in hardness than said second plate workpiece (W2).

5. A friction agitation welding method as defined in claim 4, wherein said first plate workpiece (W1) is made up of at least one aluminum plate and said second plate workpiece (W2) is made up of a single steel plate.

6. A friction agitation welding method as defined in claim 4, wherein said first and second plate workpieces (W1, W2) are made of a same material.

7. Use of a friction agitation welding device (6) for forming a weld across a joint between superposed plate workpieces (W1, W2) that comprise a first plate workpiece (W1) made up of one or more plates and a second plate workpiece (W2) made up of a single plate having a joint bore (10) formed therein, said friction agitation welding device (6) comprising:
a rotatably driven friction agitation welding tool (4) adapted to penetrate a joint between said superposed plate workpieces (W1, W2) from said first plate workpiece (W1) as to plasticize a material of said plate workpieces with frictional heat generated resulting from rotation of said rotatably driven friction agitation welding tool (4); and
a back-up tool (5) aligned with said rotatably driven friction welding tool (4) in an axis of welding (X) and supporting said superposed plate workpieces (W1, W2) from a side of said second plate workpiece (W2), said back-up tool (5) having a top cavity (21) whose opening diameter is greater than a diameter of said joint bore (10) of said second plate workpiece (W2).

8. Use of a friction agitation welding device (6) as defined in claim 7, wherein said rotatably driven friction agitation welding tool (4) comprises a cylindrical shank (4a) and a cylindrical friction agitation spindle (4b) extending from said shank (4a) and having a diameter smaller than said shank (4a).

9. Use of a friction agitation welding device (6) as defined in claim 8, wherein said shank (4a) has an annular groove (22) formed in said shank (4a) coaxially with and around said cylindrical friction agitation spindle (4b).

10. Use of a friction agitation welding device (6) as defined in claim 7, wherein said back-up tool (5) is provided with an annular wall (22) surrounding said top cavity (21).

## Patentansprüche

1. Reibrührschweißverfahren zum Bilden einer Schweißnaht über einer Verbindung zwischen übereinander liegenden Platten-Werkstücken (W1, W2), die zwischen einem drehbar angetriebenen Reibrührschweißwerkzeug (4) und einem Stützwerkzeug (5) angeordnet und gegriffen sind, welche einander in einer vorbestimmten Schweißachse (X) gegenüberliegen, wobei das Reibrührschweißverfahren folgende Schritte umfasst:
Erzeugen von übereinander liegenden Platten-Werkstücken (W1, W2), die ein erstes Platten-Werkstück (W1) bestehend aus einer oder mehreren Platten und ein zweites Platten-Werkstück (W2) bestehend aus einer einzigen Platte mit einer darin ausgebildeten Verbindungsbohrung (10) umfassen;
Anordnen und Greifen der der übereinander liegenden Werkstücke (W1, W2) zwischen dem drehbar angetriebenen Reibrührschweißwerkzeug (4) und dem Stützwerkzeug (5), wobei die Verbindungsbohrung (10) dem Stützwerkzeug (5) zugewandt ist;
Drehen und Vorbewegen des Reibrührschweißwerkzeugs (4) hin zu dem Stützwerkzeug (5) in der vorbestimmten Schweißachse (X), um das Reibrührschweißwerkzeug (4) in das erste Platten Werkstück (1) eindringen zu lassen, während das Reibrührschweißwerkzeug (4) und das erste Platten-Werkstück (W1) zusammen gedrückt werden, wodurch Reibungswärme zum Erzeugen eines plastifizierten Bereichs in einem Werkstückmaterial um das Reibrührschweißwerkzeug (4) erzeugt und ein plastifiziertes Werkstückmaterial in die Verbindungsbohrung (10) des zweiten Platten-Werkstücks (W2) gezwängt wird; und
Verfestigenlassen des plastifizierten Werkstückmaterials, um eine Schweißnaht über der Verbindung fertig zu stellen.

2. Reibrührschweißverfahren nach Anspruch 1, **dadurch gekennzeichnet, dass** das plastifizierte Werkstückmaterial teilweise aus der Verbindungsbohrung (10) extrudiert wird, um sich aus der Verbindungsbohrung (10) heraus zu verteilen.

3. Reibrührschweißverfahren nach Anspruch 1, **dadurch gekennzeichnet, dass** während des Zusammendrückens des Reibrührschweißwerkzeugs (4) und des ersten Platten-Werkstücks (W1) auf das zweite Platten-Werkstück (W2) von außen Druck in einem Bereich um die Verbindungsbohrung (10) ausgeübt wird und in einem entsprechenden Bereich an dem ersten Platten-Werkstück (W1) abgebaut wird.

4. Reibrührschweißverfahren nach Anspruch 1, **dadurch gekennzeichnet, dass** das erste Platten-Werkstück (W1) von einem anderen Material und von niedrigerer Härte als das zweite Platten-Werkstück (W2) ist.

5. Reibrührschweißverfahren nach Anspruch 4, **dadurch gekennzeichnet, dass** das erste Platten-Werkstück (W1) aus mindestens einer Aluminiumplatte besteht und das zweite Platten-Werkstück (W2) aus einer einzigen Stahlplatte besteht.

6. Reibrührschweißverfahren nach Anspruch 4, **dadurch gekennzeichnet, dass** das erste und das zweite Platten-Werkstück (W1, W2) aus einem gleichen Material bestehen.

7. Verwendung einer Reibrührschweißvorrichtung (6) zum Bilden einer Schweißnaht über einer Verbindung zwischen übereinander liegenden Platten-Werkstücken (W1, W2), die ein erstes Platten-Werkstück (W1) bestehend aus einer oder mehreren Platten und ein zweites Platten-Werkstück (W2) bestehend aus einer einzigen Platte mit einer darin ausgebildeten Verbindungsbohrung (10) umfassen, wobei die Reibrührschweißvorrichtung (6) umfasst:
ein drehbar angetriebenes Reibrührschweißwerkzeug (4), das zum Eindringen in eine Verbindung zwischen den übereinander liegenden Platten-Werkstücken (W1, W2) von dem ersten Platten-Werkstück (W1) ausgelegt ist, um ein Material der Platten-Werkstücke mit einer resultierend aus Drehung des drehbar angetriebenen Reibrührschweißwerkzeugs (4) erzeugten Reibungswärme zu plastifizieren; und
ein Stützwerkzeug (5), das mit dem drehbar angetriebenen Reibschweißwerkzeug (4) in einer Schweißachse (X) ausgerichtet ist und die übereinander liegenden Platten-Werkstücke (W1, W2) von einer Seite des zweiten Platten-Werkstücks (W2) stützt, wobei das Stützwerkzeug (5) einen oberen Hohlraum (21) aufweist, dessen Öffnungsdurchmesser größer als ein Durchmesser der Verbindungsbohrung (10) des zweiten Platten-Werkstücks (W2) ist.

8. Verwendung einer Reibrührschweißvorrichtung (6) nach Anspruch 7, **dadurch gekennzeichnet, dass** das drehbar angetriebene Reibrührschweißwerkzeug (4) einen zylindrischen Schaft (4a) und eine sich von dem Schaft (4a) erstreckende zylindrische Reibrührspindel (4b) mit einem Durchmesser kleiner als der Schaft (4a) umfasst.

9. Verwendung einer Reibrührschweißvorrichtung (6) nach Anspruch 8, **dadurch gekennzeichnet, dass** der Schaft (4a) eine in dem Schaft (4a) koaxial mit und um die zylindrische Reibrührspindel (4b) ausgebildete ringförmige Nut (22) aufweist.

10. Verwendung einer Reibrührschweißvorrichtung (6) nach Anspruch 7, **dadurch gekennzeichnet, dass** das Stützwerkzeug (5) mit einer den oberen Hohlraum (21) umgebenden ringförmigen Wand (22) versehen ist.

## Revendications

1. Procédé de soudage par friction à mouvement cyclique pour former une soudure sur un joint entre des pièces à travailler en plaque superposées (W1, W2) disposées et saisies entre un outil de soudage par friction à mouvement cyclique entraîné de manière rotative (4) et un outil de soutien (5) qui sont opposés l'un à l'autre selon un axe de soudage (X) prédéterminé, ledit procédé de soudage par friction à mouvement cyclique comprenant les étapes consistant à :
préparer des pièces à travailler en plaque superposées (W1, W2) comprenant une première pièce à travailler en plaque (W1) faite d'une ou de plusieurs plaques et une deuxième pièce à travailler en plaque (W2) faite d'une plaque unique présentant un alésage de joint (10) formé en son sein ;
disposer et saisir lesdites pièces à travailler en plaque superposées (W1, W2) entre ledit outil de soudage par friction à mouvement cyclique entraîné de manière rotative (4) et ledit outil de soutien (5) avec ledit alésage de joint (10) faisant face audit outil de soutien (5) ;
faire entrer en rotation et avancer ledit outil de soudage par friction à mouvement cyclique (4) vers ledit outil de soutien (5) selon ledit axe de soudage (X) prédéterminé pour faire en sorte que ledit outil de soudage par friction à mouvement cyclique (4) pénètre dans ladite première pièce à travailler en plaque (W1) tout en poussant ensemble ledit outil de soudage par friction à mouvement cyclique (4) et ladite première pièce à travailler en plaque (W1), générant ainsi une chaleur frictionnelle pour créer une région plastifiée dans un matériau de pièce à travailler autour dudit outil de soudage par friction à mouvement cyclique (4) et charger un matériau de pièce à travailler plastifié dans ledit alésage de joint (10) de ladite deuxième pièce à travailler en plaque (W2) ; et
permettre audit matériau de pièce à travailler plastifié de se solidifier pour réaliser une soudure sur ledit joint.

2. Procédé de soudage par friction à mouvement cyclique tel que défini à la revendication 1, dans lequel ledit matériau de pièce à travailler plastifié est partiellement extrudé hors dudit alésage de joint (10) de manière à s'étendre hors dudit alésage de joint (10).

3. Procédé de soudage par friction à mouvement cyclique tel que défini à la revendication 1, dans lequel, tout en poussant ensemble ledit outil de soudage par friction à mouvement cyclique (4) et ladite première pièce à travailler en plaque (W1), une pression est appliquée à ladite deuxième pièce à travailler en plaque (W2) dans une région autour de l'alésage de joint (10) depuis l'extérieur et est relâchée de ladite première pièce à travailler en plaque (W1) dans une région correspondante.

4. Procédé de soudage par friction à mouvement cyclique tel que défini à la revendication 1, dans lequel ladite première pièce à travailler en plaque (W1) est différente en termes de matériau et de dureté inférieure à ladite deuxième pièce à travailler en plaque (W2).

5. Procédé de soudage par friction à mouvement cyclique tel que défini à la revendication 4, dans lequel ladite première pièce à travailler en plaque (W1) est faite d'au moins une plaque d'aluminium et ladite deuxième pièce à travailler en plaque (W2) est faite d'une plaque unique d'acier.

6. Procédé de soudage par friction à mouvement cyclique tel que défini à la revendication 4, dans lequel lesdites première et deuxième pièces à travailler en plaque (W1, W2) sont faites du même matériau.

7. Utilisation d'un dispositif de soudage par friction à mouvement cyclique (6) pour former une soudure sur un joint entre des pièces à travailler en plaque superposées (W1, W2) qui comprennent une première pièce à travailler en plaque (W1) faite d'une ou de plusieurs plaques et une deuxième pièce à travailler en plaque (W2) faite d'une plaque unique présentant un alésage de joint (10) formé en son sein, ledit dispositif de soudage par friction à mouvement cyclique (6) comprenant:
un outil de soudage par friction à mouvement cyclique entraîné de manière rotative (4) adapté pour pénétrer un joint entre lesdites pièces à travailler en plaque superposées (W1, W2) depuis ladite première pièce à travailler en plaque (W1) de manière à plastifier un matériau desdites pièces à travailler en plaque avec une chaleur frictionnelle générée résultant de la rotation dudit outil de soudage par friction à mouvement cyclique entraîné de manière rotative (4) ; et
un outil de soutien (5) aligné avec ledit outil de soudage par friction entraîné de manière rotative (4) selon un axe de soudage (X) et soutenant lesdites pièces à travailler en plaque superposées (W1, W2) depuis un côté de ladite deuxième pièce à travailler en plaque (W2), ledit outil de soutien (5) présentant une cavité supérieure (21) dont le diamètre d'ouverture est supérieur au diamètre dudit alésage de joint (10) de ladite deuxième pièce à travailler en plaque (W2).

8. Utilisation d'un dispositif de soudage par friction à mouvement cyclique (6) tel que défini à la revendication 7, dans lequel ledit outil de soudage par friction à mouvement cyclique entraîné de manière rotative (4) comprend un corps d'outil cylindrique (4a) et un mandrin par friction à mouvement cyclique cylindrique (4b) s'étendant depuis ledit corps d'outil (4a) et présentant un diamètre inférieur à celui du corps d'outil (4a).

9. Utilisation d'un dispositif de soudage par friction à mouvement cyclique (6) tel que défini à la revendication 8, dans lequel ledit corps d'outil (4a) présente une rainure annulaire (22) formée dans ledit corps d'outil (4a) de manière coaxiale avec et autour dudit mandrin par friction à mouvement cyclique cylindrique (4b).

10. Utilisation d'un dispositif de soudage par friction à mouvement cyclique (6) tel que défini à la revendication 7, dans lequel ledit outil de soutien (5) est pourvu d'une paroi annulaire (22) entourant ladite cavité supérieure (21).
